Europäisches Patentamt

European Patent Office

Office européen des brevets

(19)

(11) Veröffentlichungsnummer : **0 434 780 B1**

(12) **EUROPÄISCHE PATENTSCHRIFT**

(45) Veröffentlichungstag der Patentschrift :
04.08.93 Patentblatt 93/31

(51) Int. Cl.⁵ : **B60G 17/01, B60G 17/08**

(21) Anmeldenummer : 90906871.0

(22) Anmeldetag : 12.05.90

(86) Internationale Anmeldenummer :
PCT/DE90/00340

(87) Internationale Veröffentlichungsnummer :
WO 91/00187 10.01.91 Gazette 91/02

(54) **SEMIAKTIVE FAHRWERKSREGELUNG.**

(30) Priorität : 29.06.89 DE 3921324
13.09.89 DE 3930555

(43) Veröffentlichungstag der Anmeldung :
03.07.91 Patentblatt 91/27

(45) Bekanntmachung des Hinweises auf die
Patenterteilung :
04.08.93 Patentblatt 93/31

(84) Benannte Vertragsstaaten :
DE ES FR GB IT SE

(56) Entgegenhaltungen :
EP-A- 183 039
EP-A- 197 316
EP-A- 197 317
EP-A- 321 078
DE-C- 3 810 638

(56) Entgegenhaltungen :
FR-A- 2 200 457
INGENIEURS DE L'AUTOMOBILE, Oktober
1988, Boulogne FR, Seiten 83-88,R.S. Sharp:
"Development of active suspension"

(73) Patentinhaber : ROBERT BOSCH GMBH
Postfach 30 02 20
W-7000 Stuttgart 30 (DE)

(72) Erfinder : RUBEL, Erich
Stammheimer Strasse 53
W-7140 Ludwigsburg (DE)
Erfinder : HAEGELE, Karl-Heinz
Gerokstrasse 70
W-7143 Vaihingen/Enz (DE)
Erfinder : PANTHER, Michael
Roetestrasse 8
W-7250 Leonberg-Gebersheim (DE)
Erfinder : GATTER, Klaus
Reinsburgstrasse 167
W-7000 Stuttgart 1 (DE)

**Beschreibung**

Stand der Technik

Die Erfindung betrifft ein Verfahren zur Fahrwerksregelung von Fahrzeugen, insbesondere Personen- und Nutzfahrzeugen, mit folgenden Schritten: sensorische Ermittlung des dynamischen Fahrzustands und Verarbeitung der ermittelten Fahrzustandsdaten zur Erzeugung eines Steuersignals für einen semiaktiven, vorzugsweise jedem Rad des Fahrzeugs zugeordneten Dämpfer, dessen Dämpferkraft in bestimmten fahrzustandsabhängigen Situationen auf einen möglichst kleinen Wert einstellbar ist.

Bei der Auslegung von Fahrwerkregelsystemen ist stets ein Kompromiß notwendig zwischen Komfort und Fahrsicherheit. Ein ideales Fahrwerk soll die durch Fahrbahnunebenheiten angeregten Schwingungen möglichst gut dämpfen und gleichzeitig die Radaufstandskräfte möglichst konstant auf einem vorgegebenen Wert halten, weil hierdurch die Räder die beste Seitenführung erhalten, also das Fahrzeug mit maximaler Sicherheit führen.

Herkömmliche Fahrzeuge weisen ein sogenanntes passives Dämpfungssystem auf, das heißt, parallel zur jeweils vorhandenen Federanordnung eines Rades ist ein Dämpfer geschaltet, der einen insbesondere flüssigkeitsgedämpften Kolben aufweist. Durch Zug- bzw. Druckkräfte erfolgt eine Flüssigkeitsverdrängung. Die Flüssigkeit passiert dabei einen Durchströmquerschnitt.

Bei einer sogenannten aktiven Fahrwerksregelung sind Aktuatoren eingesetzt, die einen von einem Kolben in zwei Arbeitsräume unterteilten Zylinder aufweisen. In die beiden Arbeitsräume kann (aktiv) ein Druckmedium ein- bzw. herausgelassen werden, so daß -je nach Steuerung des Druckmediums- jede gewünschte Kraft einstellbar ist. Trägt man die Dämpferkraft über der Kolbengeschwindigkeit des Dämpfers in einem kartesischen Koordinatensystem auf, so kann die Kennlinie in allen vier Quadranten liegen, das heißt, in Abweichung zum passiven System, bei dem die Betriebspunkte nur im ersten und dritten Quadranten liegen können (positive Dämpferkraft und positive Kolbengeschwindigkeit; negative Dämpferkraft und negative Kolbengeschwindigkeit), sind bei aktiver Dämpfung auch bei positiver Dämpferkraft negative Kolbengeschwindigkeiten und bei negativer Dämpferkraft positive Kolbengeschwindigkeiten realisierbar. Durch einen entsprechenden Energieaufwand für die Steuerung des Druckmediums läßt sich bei einem aktiven System des dem Fahrwerk zugeordnete Rad derart schnell auf-und niederbewegen, daß es den Unebenheiten der Fahrbahn folgt, so daß die Forderungen an eine optimale Fahrwerksauslegung nahezu erfüllbar sind. Das aktive System erfordert jedoch einen entsprechend hohen apparativen und energetischen Aufwand.

Zu guten Ergebnissen kommt man auch bei einer sogenannten semiaktiven Fahrwerksregelung, die den herkömmlichen, passiven Systemen ebenfalls weit überlegen ist. Bei einem semiaktiven System läßt sich die Dämpferhärte verstellen. Hierzu weist ein semiaktiver Dämpfer einen steuerbaren Durchströmquerschnitt für das vom Kolben verdrängbare Druckmedium auf. Je nach Fahrzustand wird mittels eines Regelsystems die Dämpferkraft den momentanen Bedingungen durch Einstellung des Durchströmquerschnitts angepaßt.

Es sind semiaktive Fahrwerksregelungen bekannt, bei denen die Dämpfercharakteristik in Abhängigkeit vom Fahrbahnzustand und/oder Fahrzustand umgeschaltet werden kann. Mithin erfolgt eine Variation der Dämpferkennlinie. Damit kann jedoch die Dämpfercharakteristik den jeweiligen Anforderungen nur näherungsweise und in Stufensprüngen angepaßt werden, z.B. derart, daß bei glatter Fahrbahn und gleichmäßiger Fahrgeschwindigkeit eine geringe Dämpfung und bei holpriger Fahrbahn oder dynamischen Fahrmanövern (bremsen, schnelle Lenkmanöver) eine höhere Dämpfung realisiert wird. Die erzielbaren Ergebnisse können hohe Anforderungen nicht erfüllen.

Aus der DE-OS 35 13 128 ist eine Vorrichtung zur Dämpfung von Bewegungsabläufen bekannt, bei der ein semiaktives Dämpfungssystem zum Einsatz gelangt, das in seiner Charakteristik einem aktiven System angenähert werden soll. Hierzu ist vorgesehen, daß in Abhängigkeit von bestimmten Betriebsbedingungen, welche durch Sensoren erfaßt werden, das Dämpfungssystem in einen Zustand gestaltet werden kann, in dem die Dämpferkraft nahezu Null ist. Die Einschaltung dieses Zustandes erfolgt immer dann, wenn unter der Annahme des Einsatzes eines aktiven Systems eine Energiezufuhr erfolgen würde. Der semiaktive Dämpfer wird somit in den Bereichen, in denen einem aktiven System Energie zugeleitet werden würde bzw. ein passives System Energie vernichten würde, derart geschaltet, daß die Dämpfungskraft möglichst klein ist. Gegenüber einem passiven System lassen sich erhebliche Vorteile erzielen. Dennoch besteht das Bedürfnis nach besseren Lösungen.

Aus der EP-A-0 197 376 ist eine Vorrichtung zur Dämpfung von Bewegungsabläufen gemäß dem oberbegriff des Anspruchs 1 bekannt.

Vorteile der Erfindung

Das erfindungsgemäße Verfahren mit den im Hauptanspruch genannten Merkmalen hat demgegenüber den Vorteil, daß eine weitestgehend dem aktiven System innewohnende Dämpfungscharakteristik erzielt werden kann, gleichwohl jedoch keine Energien zur aktiven Druckmittelzuführung aufgebracht werden müssen. Vielmehr kommt ein semiaktiver Dämpfer zum Einsatz, bei dem die zur Querschnittsvariation erforderliche Stellenergie typbedingt relativ klein ist. Sofern die Fahrwerksregelung an dem vorzugsweise jedem Rad des Fahrzeugs zugeordneten semiaktiven Dämpfer Betriebspunkte erfordert, die aufgrund der semiaktiven Dämpferfunktion realisierbar sind, so werden diese Betriebspunkte angenommen. Wenn Betriebspunkte vorgegeben werden, die aufgrund der semiaktiven Dämpfer nicht angefahren werden können, da sie eine aktive Dämpferfunktion (Vier-Quadranten-Betrieb) erfordern, so wird erfindungsgemäß eine Ersatzeinstellung der semiaktiven Dämpfer vorgenommen. Diese erfolgt an jedem semiaktiven Dämpfer -also an jedem Rad des Fahrzeugs- in Abhängigkeit von einem Steuersignal und von dem jeweiligen Istwert der Dämpferkraft des entsprechenden Dämpfers, wobei -je nach dem Auswerteergebnis von Steuersignal und Istwert- entweder eine maximal harte oder maximal weiche Einstellung des Dämpfers vorgenommen wird. Das Steuersignal resultiert aus sensorisch ermittelten und anschließend verarbeiteten Daten des jeweils momentan vorliegenden dynamischen Fahrzustandes des Fahrzeugs. Insbesondere kommt ein Zustandsregler zum Einsatz, der aus den Daten die momentan optimale Dämpferkraft bezüglich eines jeden Rades des Fahrzeugs ermittelt. Ein semiaktiver Dämpfer hat im Gegensatz zu einem passiven Dämpfer keine Kennlinie, sondern ein Kennfeld, da der Durchströmquerschnitt unabhängig von der Kolbengeschwindigkeit durch das erwähnte Steuersignal veränderbar ist. Mit einem semiaktiven Dämpfer können daher beliebig viele Wertepaare von Dämpferkraft und Kolbengeschwindigkeit eingestellt werden, die jedoch innerhalb bestimmter Grenzen liegen. Diese sind durch die Endstellungen der stetigen Variierbarkeit des Durchströmquerschnitts vorgegeben. Der minimale Querschnitt ergibt im Dämpferkraft/Kolbengeschwindigkeits-Diagramm eine erste und der maximale Durchströmquerschnitt eine zweite Grenzkennlinie. Durch entsprechende Steuersignale lassen sich daher bei einem semiaktiven Dämpfer alle Wertepaare von Dämpferkraft und Kolbengeschwindigkeit einstellen, welche im ersten und dritten Quadranten zwischen den genannten Grenzkennlinien liegen. Ferner sind konstruktions- und betriebsbedingte Grenzen vorhanden; dieses sind die maximale Dämpferkraft und die maximale Kolbengeschwindigkeit. Alle Wertepaare, die außerhalb der genannten Grenzen liegen, insbesondere solche, die im zweiten und vierten Quadranten vorhanden sind, können mit einem semiaktiven Dämpfer nicht erreicht werden. In gewissen Situationen verlangt eine optimale Fahrwerksregelung jedoch auch durch die Wertepaare vorgegebene Betriebspunkte, die außerhalb der aufgezeigten Grenzen im ersten bzw. dritten Quadranten liegen, aufgrund des semiaktiven Systems -wie erwähnt- jedoch nicht realisierbar sind. In einem solchen Falle wird die erfindungsgemäß vorgesehene Ersatzeinstellung vorgenommen, die eine weitgehende Annäherung an die Eigenschaften eines aktiven Systems herbeiführt und dennoch die Vorteile des semiaktiven Systems bezüglich des apparativen Aufbaus und der energetischen Betriebsführung beläßt.

Insbesondere ist vorgesehen, daß die Ersatzeinstellung solange beibehalten wird, bis wieder ein Betriebspunkt vorliegt, der von dem semiaktiven Dämpfer realisierbar ist. Die erfindungsgemäße Ersatzeinstellung wird also nur während der Aktivsystemphasen vorgenommen; es erfolgt laufend eine Überwachung des jeweiligen Betriebspunktes, so daß bei vom semiaktiven System realisierbaren Wertepaaren aus der Ersatzeinstellung sofort wieder auf den normalen semiaktiven Betrieb zurückgeschaltet wird.

Vorzugsweise wird für die Ermittlung der Ersatzeinstellung das Produkt aus dem Steuersignal und dem Istwert der Dämpferkraft gebildet und bei einem negativen Vorzeichen dieses Produkts die Ersatzeinstellung vorgenommen.

Als Entscheidungskriterium für eine maximal harte oder maximal weiche Dämpfereinstellung wird der Betrag der Kolbengeschwindigkeit herangezogen, der in dem Moment vorliegt, in dem eine Ersatzeinstellung der Dämpferkraft erforderlich wird. Der Dämpfer wird ersatzweise maximal hart eingestellt, wenn der Betrag der Kolbengeschwindigkeit unterhalb einer Grenzgeschwindigkeit liegt. Eine maximal weiche Ersatzeinstellung erfolgt, wenn der Betrag der Kolbengeschwindigkeit oberhalb der Grenzgeschwindigkeit liegt. Die Grenzgeschwindigkeit ist vorgebbar.

Vorzugsweise handelt es sich bei dem Steuersignal um eine Steuerspannung. Diese wird von dem bereits erwähnten Regler geliefert; sie besitzt einen linearen Verlauf.

Da ein semiaktiver Dämpfer bezüglich seiner Ansteuerung ein nichtlineares Verhalten aufweist, wird die vom Regler gelieferte lineare Steuerspannung vorzugsweise in eine dem nichtlinearen Steuerverhalten des Dämpfers angepaßte Betätigungsspannung umgeformt. Diese Aufgabe wird von einer Kompensationsschaltung durchgeführt.

Als Fahrzustandsgrößen werden die Eingangsgrößen: relativer Einfederweg, Radbeschleunigung, Dämpferkraft, Aufbaubeschleunigung, Straßenunebenheit und Straßenunebenheitsgeschwindigkeit verwendet.

Die Dämpferkräfte werden so bestimmt,daß beim Einlenken des Fahrzeugs in eine Kurve ein leicht übersteuerndes und beim Zurücklenken in die Geradeausfahrt ein leicht untersteuerndes Lenkverhalten erzeugt wird.

Vorzugsweise können nach dem elektrorheologischen Prinzip arbeitende semiaktive Dämpfer zum Einsatz kommen.

Die Erfindung betrifft ferner eine Vorrichtung zur Fahrwerksregelung von Fahrzeugen, insbesondere Personen- und Nutzfahrzeugen, mit den dynamischen Fahrzustand erfassenden Sensoren, deren Fahrzustandsdaten einer Signalverarbeitungsschaltung zur Erzeugung eines Steuersignals zugeführt werden und mit vorzugsweise jedem Rad des Fahrzeugs zugeordneten Dämpfern, deren Dämpferkraft jeweils in bestimmten fahrzustandsabhängigen Situationen auf einen möglichst kleinen Wert einstellbar ist, wobei jeder semiaktive Dämpfer in Abhängigkeit von dem Steuersignal und dem Istwert der Dämpferkraft ersatzweise für eine bezüglich des vorliegenden Betriebspunktes zwar gewünschte, jedoch nicht realisierbare aktive Dämpferfunktion maximal hart oder maximal weich eingestellt wird (Ersatzeinstellung). Vorzugsweise weist die Signalverarbeitungsschaltung mindestens einen Komparator zum Vergleich des Betrags der Kolbengeschwindigkeit mit der Grenzgeschwindigkeit auf.

Zeichnung

Die Erfindung wird im folgenden anhand der Figuren näher erläutert. Es zeigen:
Figur 1 ein Blockschaltbild der semiaktiven Fahrwerksregelung,
Figur 2 eine Modelldarstellung der Fahrwerksregelung im Bereich eines Rades,
Figur 3 einen semiaktiven Dämpfer in schematischer Darstellung,
Figur 4 ein Diagramm der Dämpferkraft des semiaktiven Dämpfers in Abhängigkeit von der Kolbengeschwindigkeit,
Figur 5 ein Blockdiagramm der Fahrwerksregelung und
Figur 6 ein detailliertes Blockschaltbild der Fahrwerksregelung.

Beschreibung des Ausführungsbeispiels

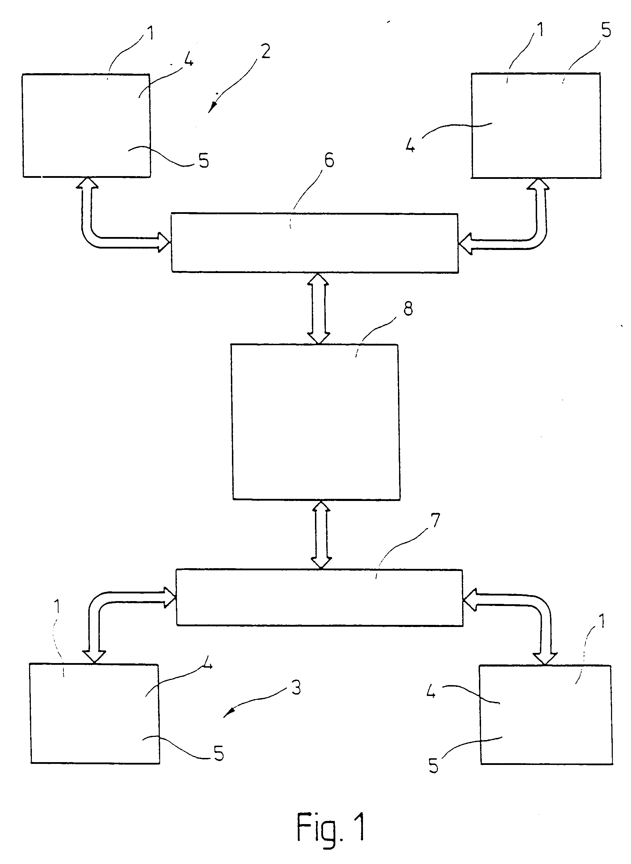

Die Figur 1 zeigt im groben Überblick das Blockschaltbild eines mit semiaktiver Fahrwerksregelung versehenen Fahrzeugs. Jedem Rad 1 der Vorderachse 2 sowie der Hinterachse 3 sind Sensoren 4 sowie Dämpfer 5 zugeordnet. Bei den Dämpfern 5 handelt es sich jeweils um einen semiaktiven Dämpfer. Dieser ist durch einen verstellbaren Durchströmquerschnitt eines kommunizierende Kammern des Dämpfers 5 verbindenden Bypass' gekennzeichnet und er weist einen Kolben auf, der den zugehörigen Zylinder in die genannten kommunizierenden Kammern unterteilt. Der Dämpfer 5 ist im Bereich jedes Rades 1 zwischen die Radtrageteile (z. B. Achse) und dem Fahrzeugaufbau geschaltet. Parallel zu ihm liegt eine Federanordnung.

Die genannten Baugruppen der Vorderachse 2 und Hinterachse 3 stehen mit Aufbereitungsschaltungen 6 und 7 in Verbindung, die eine Verarbeitung der Sensorsignale vornehmen sowie die Steuersignale für die Dämpfer 5 liefern. Die Aufbereitungsschaltungen 6 und 7 sind an einem Prozeßrechner 8 angeschlossen.

Insgesamt ist die Anordnung so ausgebildet, daß eine schnelle, semiaktive Fahrwerksregelung vorliegt, d. h., die von den Sensoren 4 ermittelten Daten werden im On-Line-Betrieb - also während des Fahrvorgangs - verarbeitet und in entsprechende Steuersignale für die einzelnen semiaktiven Dämpfer 5 umgesetzt, so daß sich -in Abhängigkeit vom Fahrzustand- ein optimaler Fahrkomfort bei größter Fahrsicherheit ergibt. Fahrkomfort und Fahrsicherheit stehen sich gegensätzlich gegenüber, da ein hoher Fahrkomfort eine weiche Dämpfercharakteristik erfordert, welche andererseits jedoch keine hinreichende Fahrsicherheit gewährleistet. Eine harte Dämpfercharakteristik bietet eine hohe Fahrsicherheit, verringert jedoch den Fahrkomfort. Mit Hilfe der erfindungsgemäßen, semiaktiven Fahrwerksdämpfung wird -in Abhängigkeit vom Fahrzustand und/oder von den Anforderungen des Fahrers- das Fahrwerk stets optimal gedämpft, d. h., in kritischen Situationen (z. B. bremsen, schnelle Kurvenfahrt usw.) ist eine entsprechend harte Dämpfung und in unkritischen Situationen (z. B. Geradeausfahrt mit konstanter Geschwindigkeit) eine weiche, komfortable Dämpfung gegeben. Der detaillierte Aufbau der erfindungsgemäßen Fahrwerksregelung wird im nachfolgenden näher beschrieben.

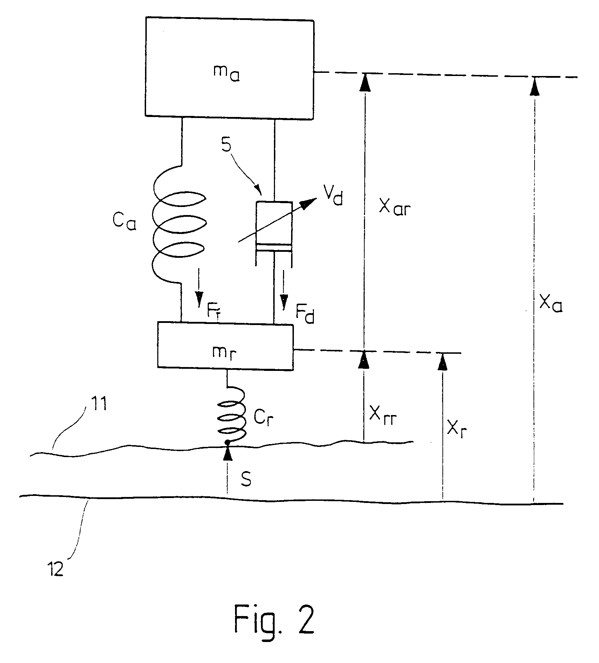

Figur 2 zeigt eine Modelldarstellung eines Radbereiches des Fahrzeuges. Die Darstellung der Figur 2 wird auch als sogenanntes "Einradmodell" bezeichnet. Bei einem mit vier Rädern 1 versehenen Kraftfahrzeug sind demgemäß vier derartige Anordnungen vorgesehen, wobei jeder Radbereich eine unabhängige Fahrwerksregelung aufweist. Die Radmasse $m_r$ steht über eine Feder mit der Federkraft $F_f$ mit der Fahrzeugaufbaumasse $m_a$ in Verbindung. Unter der Fahrzeugaufbaumasse $m_a$ ist bei dem Einradmodell der dem jeweiligen Rad 1 zuschlagbare Massenanteil der Gesamtmasse zu verstehen. Die Feder besitzt die Federkonstante $c_a$. Parallel zur Feder liegt der im vorstehenden bereits beschriebene Dämpfer 5, der die Dämpferkraft $F_d$ aufweist, welche durch eine Betätigungsspannung $V_d$ einstellbar ist. Zwischen der Radmasse $m_r$ und der Fahrzeugaufbaumasse $m_a$ liegt der relative Einfederweg $x_{ar}$. Die elastischen Teile des Rades 1 sind durch die Federkonstante $c_r$ berücksichtigt. Das Rad 1 läuft auf der Fahrbahn 11 ab, die die Fahrbahnunebenheit S aufweist. Die Fahrbahnunebenheit S wird gegenüber einem Inertialsystem 12 (Vertikalkomponente) ermittelt. Ausgehend von diesem Inertialsystem 12 besteht zum Rad 1 der Radweg $x_r$ und zur Fahrzeugaufbaumasse $m_a$ der Aufbauweg $x_a$. Zwischen der Fahrbahnunebenheit S und dem Rad 1 erstreckt sich der relative Radweg $x_{rr}$.

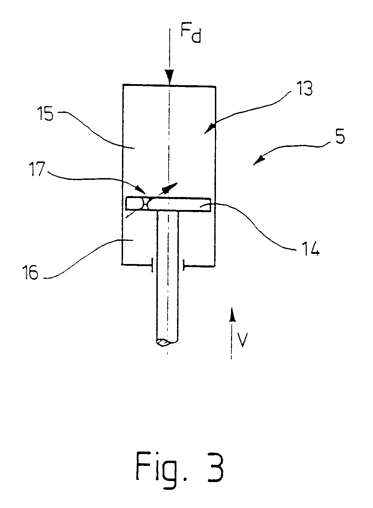

Die Figur 3 zeigt -in schematischer Darstellung- den Aufbau des eingesetzten, semiaktiven Dämpfers 5. Sein Zylinder 13 ist durch einen Kolben 14 in zwei kommunizierende Kammern 15 und 16 unterteilt. Die kommunizierenden Kammern 15 und 16 stehen über einen Bypass 17 miteinander in Verbindung, dessen Durchströmquerschnitt durch die Betätigungsspannung $V_d$ einstellbar ist. Beispielsweise kann eine durch die Betätigungsspannung $V_d$ gesteuerte, elektromagnetische Einrichtung vorgesehen sein, mit der der Durchströmquerschnitt variiert werden kann. Im Innern der kommunizierenden Kammern 15 und 16 befindet sich ein Druckmedium (z. B. Hydraulikflüssigkeit). Aus der Figur 3 geht ferner die Dämpferkraft $F_d$ und die Kolbengeschwindigkeit v hervor.

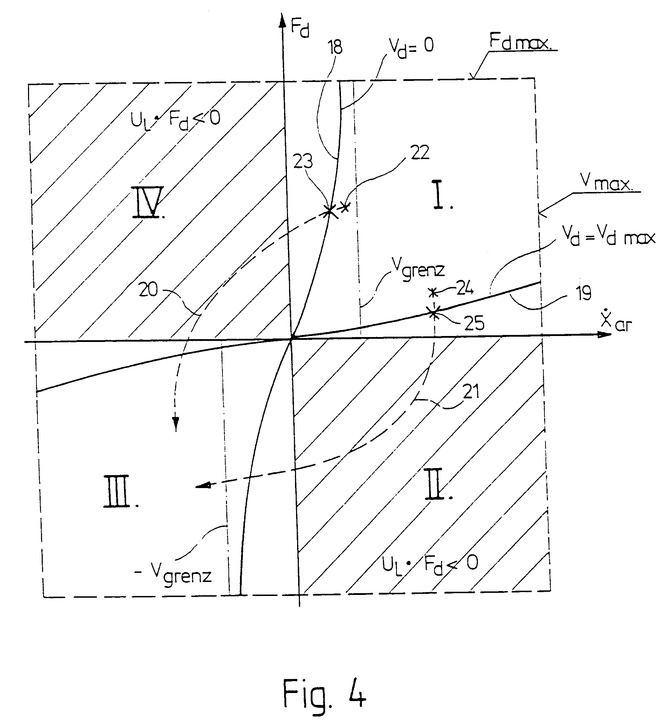

In Figur 4 ist das Dämpferkraft-Kolbengeschwindigkeits-Diagramm des semiaktiven Dämpfers 5 wiedergegeben. Da bei einem semiaktiven Dämpfer lediglich der Durchströmquerschnitt des Bypass' 17 verstellbar ist, also kein aktiver Druckaufbau in den kommunizierenden Kammern 15 und 16 vorgenommen werden kann, ist lediglich ein Betrieb in dem ersten und dritten Quadranten (I, III) des Diagramms möglich. Mithin sind Betriebspunkte mit positiver Dämpferkraft $F_d$ und positiver Kolbengeschwindigkeit v (die Kolbengeschwindigkeit entspricht der relativen Einfedergeschwindigkeit $\dot{X}_{ar}$) sowie negativer Dämpfungskraft $F_d$ und negativer Kolbengeschwindigkeit v einstellbar. Der zweite und vierte Quadrant (II, IV) kann nur von einem aktiven Dämpfer angefahren werden, bei dem die kommunizierenden Kammern aktiv mit Druckmedium beaufschlagt werden können. Hierdurch läßt sich bei positiver Dämpferkraft $F_d$ auch eine negative Kolbengeschwindigkeit v und bei negativer Dämpferkraft $F_d$ auch eine positive Kolbengeschwindigkeit v realisieren. Mithin ist der zweite und vierte Quadrant (II, IV) im vorliegenden semiaktiven System durch die Gleichung

$$U_l \cdot F_d < 0$$

gekennzeichnet.

Das Diagramm der Figur 4 ist durch die maximal aufbringbare Dämpferkraft $F_{dmax}$ und durch die maximale Kolbengeschwindigkeit $v_{max}$ begrenzt. Ferner sind zwei Grenzkennlinien 18 und 19 angegeben. Die Grenzkennlinie 18 kennzeichnet eine Dämpfercharakteristik mit maximaler Härte; dieser Zustand liegt bei einer Betätigungsspannung $V_d = 0$ vor. Die Grenzkennlinie 19 betrifft eine Dämpfercharakteristik mit größtmöglicher Weichheit; diese liegt bei einer Betätigungsspannung $V_d = V_{dmax}$ vor. Die Zuordnung von Bypass-Querschnitt und Steuersignal ist grundsätzlich willkürlich. Sie wird erfindungsgemäß so gewählt, daß bei Ausfall des Steuersignals, z. B. aufgrund eines Defekts der Elektronik, der Dämpfer 5 möglichst hart eingestellt wird (Grennzkennlinie 18), weil dieser Betriebszustand zwar extrem unkomfortabel, aber sicher ist (Prinzip "fail safe"). Ferner ist ein Überdruckventil vorgesehen, das den Dämpfer 5 vor Überlastungen bei eventuellen Fehlfunktionen schützt.

Betrachtet man nun das Diagramm 4, so können mit dem semiaktiven Dämpfer 5 nur Betriebspunkte des ersten und dritten Quadranten angefahren werden, die zwischen den Grenzkennlinien 18 und 19 liegen. Für die erfindungsgemäße optimale Dämpfung des Fahrwerks errechnet der Regler (auf den im nachfolgenden noch näher eingegangen wird) in sehr kurzen Zeitabständen die momentan notwendige Dämpferkraft $F_d$ (Sollwert) nach Betrag und Vorzeichen. Liegt diese momentane Dämpferkraft $F_d$ im I. oder III. Quadranten des Diagramms Figur 4, d. h., ist die Beziehung:

$$F_d \cdot U_l > = 0 \quad (1),$$

so kann durch entsprechende Ansteuerung des Bypass' 17 (Figur 3) diese Sollkraft eingestellt werden. Unter $U_1$ ist eine Steuerspannung zu verstehen, d. h., es handelt sich hier um die Ausgangsspannung des erwähnten Reglers. Es gibt jedoch Fahrzustände, für die

$$F_d \cdot U_l < 0 \quad (2)$$

ist, d. h., die momentane Dämpferkraft (Sollwert) liegt im II. oder IV. Quadranten. Es wird somit eine aktive Dämpferreaktion gefordert. Mit dem semiaktiven Dämpfer 5 ist dies nicht realisierbar. Der Regler muß nun ersatzweise eine Dämpfereinstellung vornehmen, durch die ein möglichst geringer Fehler gegenüber der Sollkraft entsteht. Es gilt nun zu entscheiden, ob eine möglichst große oder eine möglichst kleine Dämpferkraft der Sollkraft am nächsten kommt. In Figur 4 soll an zwei Beispielen dargelegt werden, wie diese Entscheidung erfindungsgemäß getroffen wird.

Beispiel 1:

Angenommen die Dämpferkraft $F_d$ (Sollkraft) entspricht gemäß dem letzten Berechnungszyklus' des Reglers dem Punkt 22 in Figur 4 und der weitere Verlauf der Sollkraft der folgenden Berechnungszyklen entspricht dem Verlauf des Pfeils 20, so wird in Punkt 23, der auf der Grenzkennlinie 18 liegt, die Dämpfereinstellung maximal hart und kurz darauf der IV. Quadrant erreicht. Hier kommt also eine möglichst große Dämpferkraft der Sollkraft am nächsten. Erfindungsgemäß wird der Dämpfer in die Stellung "maximal hart" gesteuert, wenn und solange gleichzeitig die Bedingungen

$$U_l \cdot F_d < 0 \quad (2)$$

und

$$|v| < V_{Grenz} \text{ ist.} \quad (3)$$

Unter der Grenzgeschwindigkeit $V_{Grenz}$ ist eine vorgebbare Kolbengeschwindigkeit zu verstehen. Sie ist in der Figur 4 als strichpunktierte Linie im ersten und dritten Quadranten eingetragen.

Beispiel 2:

Es sei angenommen, daß die Dämpferkraft (Sollkraft) gemäß dem letzten Berechungszyklus' des Reglers dem Punkt 24 in Figur 4 entspricht und der weitere Verlauf der Sollkraft in den folgenden Berechnungszyklen dem Verlauf des Pfeils 21 folgt. Schon im Punkt 25, der auf der Grenzkennlinie 19 liegt, wird die Dämpfereinstellung maximal weich und kurz danach wird der II. Quadrant erreicht. Eine möglichst kleine Dämpferkraft kommt der Sollkraft somit am nächsten. Erfindungsgemäß wird der Dämpfer also maximal weich gesteuert, wenn die Bedingungen

$$U_l \cdot F_d < 0 \quad (2)$$

und

$$|v| > V_{Grenz} \quad (4)$$

erfüllt sind. Unter $|v|$ ist - wie im vorstehenden Beispiel - der Betrag der Kolbengeschwindigkeit v zu verstehen.

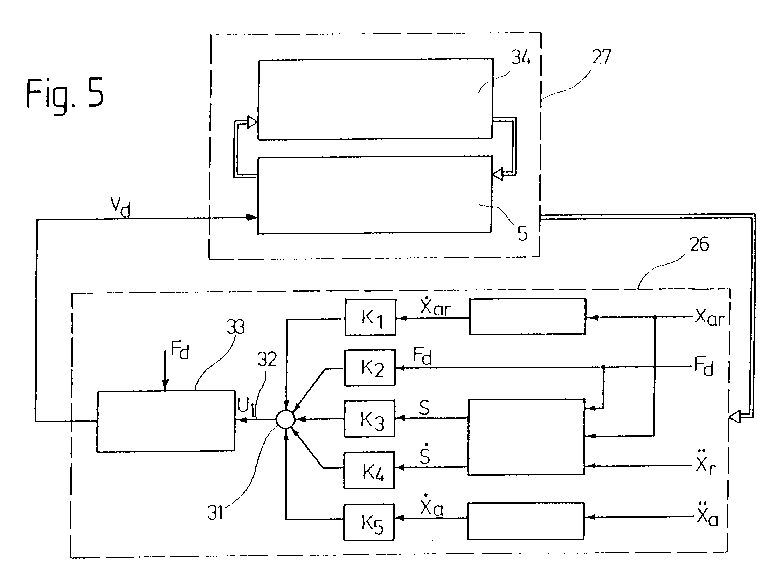

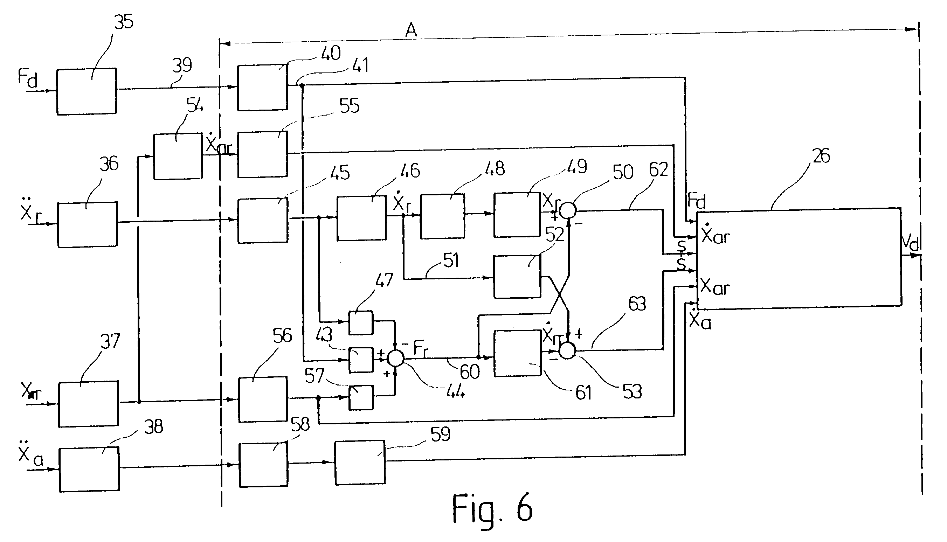

Die konkrete Ausbildung der erfindungsgemäßen Fahrwerksregelung wird anhand der Figuren 5 und 6 näher erläutert.

Die Figur 5 zeigt den Regler 26 sowie eine zum Regelkreis gehörige Strecke 27. Es sind die bereits genannten Sensoren 4 vorgesehen, die den relativen Einfederweg $x_{ar}$, die Dämpferkraft $F_d$, die Radbeschleunigung $\ddot{x}_r$ und die Aufbaubeschleunigung $\ddot{x}_a$ erfassen. Aus dem relativen Einfederweg $x_{ar}$ wird die relative Einfedergeschwindigkeit $\dot{x}_{ar}$ gebildet. Aus dem relativen Einfederweg $x_{ar}$, der Dämpferkraft $F_d$ und der Radbeschleunigung $\ddot{x}_r$ wird die Unebenheitsgeschwindigkeit $\dot{S}$ und die Straßenunebenheit S berechnet. Aus der Aufbaubeschleunigung $\ddot{x}_a$ wird -durch Integration- die Aufbaugeschwindigkeit $\dot{x}_a$ bestimmt. Die so gewonnenen Zwischengrößen werden gewichtet (K1 bis K5) an einen Summenpunkt 31 gelegt, an dessen Ausgang 32 die Steuerspannung $U_l$ gebildet wird. Diese wird einer Kompensationsschaltung 33 zugeführt, die hieraus unter Berücksichtigung des nichtlinearen Steuerverhaltens des semiaktiven Dämpfers 5 die Betätigungsspannung $V_d$ bildet. Ferner wird in Block 33 die Bedingung

$$F_d \cdot U_l > = 0 \quad (1)$$

überwacht. Falls die Bedingung nicht erfüllt ist, wird die Betätigungsspannung $V_d$ entsprechend den oben beschriebenen Ausnahmeregeln auf $V_d = 0$ bzw auf $V_d = V_{dmax}$ geschaltet. Die Betätigungsspannung $V_d$ ist an den Dämpfer 5 angeschlossen. Der mit 34 bezeichnete Block der Strecke 27 deutet das beschriebene Einrad-Modell (Figur 2) an.

Der detaillierte Aufbau geht aus der Figur 6 hervor. Dort ist die Regelkonzeption für ein Rad 1 des Fahrzeugs wiedergegeben. Die Dämpferkraft $F_d$, die Radbeschleunigung $\ddot{x}_r$, der relative Einfederweg $x_{ar}$ und die Aufbaubeschleunigung $\ddot{x}_a$ werden Tiefpaßfiltern 35, 36, 37 und 38 zugeführt, die als sogenannte Anti-Aliasing-Filter ausgebildet sind. Vom Tiefpaßfilter 35 führt eine Leitung 39 zu einem Hochpaßfilter 40, dessen Ausgang 41 die nunmehr gefilterten Daten der Dämpferkraft $F_d$ an den Regler 26 anlegt. Die Leitung 41 führt ferner zu einer Bewertungsschaltung 43, die an einen Summenpunkt 44 angeschlossen ist. Der Ausgang des Tiefpaßfilters 36 ist ebenfalls an einen Hochpaßfilter 45 angeschlossen, das mit einem Integrierer 46 in Verbindung steht. Ferner führt der Ausgang des Hochpaßfilters 45 zu einer Bewertungsschaltung 47, die an den Summenpunkt 44 mit negativem Vorzeichen angeschlossen ist. Am Ausgang des Integrierers 46 steht die Radgeschwindigkeit $\dot{x}_r$ zur Verfügung, die über ein Filter 48 einem weiteren Integrierer 49 zugeführt wird, an dessen Ausgang der Radweg $x_r$ ansteht, der einer Summierstelle 50 zugeführt wird. Die Ausgangsgröße $\dot{x}_r$ (Radgeschwindigkeit) des Integrierers 46 wird über eine Leitung 51 und ein Filter 52 einer Summierstelle 53 zugeleitet. Der Ausgang des Tiefpaßfilters 37 ist an einen Differenzierer 54 angeschlossen, der über ein Hochpaß-Filter 55 die relative Einfedergeschwindigkeit $\dot{x}_{ar}$ dem Regler 26 zuführt. Ferner steht der Ausgang des Tiefpaßfilters 37 mit einem Hochpaßfilter 56 in Verbindung, dessen Ausgang über eine Bewertungsschaltung 57 zum Summierpunkt 44 führt. Der Ausgang des Hochpaßfilters 56 ist am Regler 26 angeschlossen und liefert den relativen Einfederweg $x_{ar}$. Der Ausgang des Tiefpaßfilters 38 ist ebenfalls mit einem Hochpaßfilter 58 verbunden, dessen Ausgang an einen Integrierer 59 angeschlossen ist, der dem Regler 26 die Aufbaugeschwindigkeit $\dot{x}_a$ zuführt. Der Ausgang des Summierpunktes 44 führt über eine Leitung 60 zu einem Differenzierer 61, an dessen Ausgang die relative Radgeschwindigkeit $\dot{x}_{rr}$ zur Verfügung steht, die -mit negativem Vorzeichen- an die Summierstelle 53 angeschlossen ist. Die Leitung 60 steht ferner -auch mit negativem Vorzeichen- mit der Summierstelle 50 in Verbindung. Der Ausgang 62 der Summierstelle 50 ist an den Regler 26 angeschlossen und liefert die Fahrbahnunebenheit S. Der Ausgang 63 der Summierstelle 53 liefert die Fahrbahnunebenheitsgeschwindigkeit $\dot{S}$, die an den Regler 26 angeschlossen ist. Der Regler 26 bildet aus den erwähnten Eingangsgrößen ($F_d$, $\dot{x}_{ar}$, S, $\dot{S}$, $x_{ar}$ und $\dot{x}_a$) die Betätigungsspannung $V_d$.

Die Tiefpaßfilter 35, 36 und 37 weisen die Übertragungsfunktionen

$$\frac{1}{1 + 2\,d_m\,T_m\,s + T_m^2\,s^2}$$

auf, wobei $d_m$ den Wert 1,04 und $T_m$ den Wert 500 Hz haben. Das Glied "s" stellt den in der Übertragungstechnik üblichen Laplace-Operator dar.

Das Tiefpaßfilter 38 besitzt die Übertragungsfunktion

$$\frac{1}{1 + 2\,d_m\,T_m\,s + T_n^2\,s^2}$$

mit $d_n$ = 1,04 und $T_n$ = 50 Hz.

Die Hochpaßfilter 40, 45, 55, 56 und 58 weisen jeweils die Übertragungsfunktion

$$1 - \frac{1}{(1 + T\,s)^2}$$

auf; die Zeitkonstante T beträgt 5 s.

Die Übertragungsfunktionen der Integrierer 46 und 49 sowie 59 lauten

$$\frac{T}{T_1} \cdot \frac{1}{1 + T\,s}$$

wobei $T_1$ beim Integrierer 46 0,01019 s, beim Integrierer 49 0,05 s und beim Integrier 59 0,0510 s ist. Für T wird bei allen drei Integrierern 1,0 s gesetzt. Ferner wurden im vorstehenden die Differenzierer 54 und 61 genannt. Ihre Übertragungsfunktion lautet jeweils

$$\frac{T_d\,s}{1 + 2\,d\,T\,s + T^2\,s^2}$$

mit $T_d$ = 0,05 s , d = 0,8 und f = 100 Hz beim Differenzierer 54 und $T_d$ = 0,0125 s, d = 0,8, f = 100 Hz beim Differenzierer 61.

Die Schaltung 48 hat die Übertragungsfunktion

$$\frac{1}{1 + T\,s}$$

T weist bei der Schaltung 48 die Größe 5 s auf.

Das Filter 52 ist durch die Übertragungsfunktion

$$\frac{1}{1 + 2\,d\,T\,s + T^2\,s^2}$$

gekennzeichnet. Hier beträgt d = 0,8 und f = 100 Hz.

An den Summierpunkt 44 werden als Eingangsgrößen der Ausgang der Bewertungsschaltung 47 mit negativen und die Ausgänge der Bewertungsschaltungen 43 und 57 mit positiven Vorzeichen angelegt. Der Summierstelle 50 wird der Radweg $x_r$ mit positivem Vorzeichen und das Signal der Leitung 60 mit negativem Vorzeichen zugeführt. An die Summierstelle 53 ist der Ausgang der Schaltung 52 mit positivem Vorzeichen und die Ausgangsgröße des Differenzierers 61 mit negativem Vorzeichen angelegt.

Durch die erfindungsgemäße, schnelle, semiaktive Fahrwerksregelung wird einerseits die Straßenunebenheit S und deren zeitliche Änderung $\dot{S}$ unter jedem Rad 1 berücksichtigt und für jeden Momentanwert von S und $\dot{S}$ die optimale Dämpferkraft $F_d$ berechnet (Zustandsregler). Dabei besteht unter den erfindungsgemäßen Bedingungen die Möglichkeit, die einstellbare Dämpferkraft $F_d$ praktisch von der Dämpfung Null bis zu einer extrem harten Dämpfung stufenlos zu variieren. Vorzugsweise kommt für die Bearbeitung der ermittelten Daten ein schneller Prozeßrechner zur Anwendung. Insbesondere erfolgt eine optimale Radlastverteilung zur Beeinflussung des Lenkungsverhaltens derart, daß beim Einlenken in eine Kurve ein übersteuerndes und beim Zurücklenken in die Geradeausfahrt ein untersteuerndes Verhalten vorliegt. Vorzugsweise sind die in der Figur 6 dargestellten Komponenten innerhalb des durch die senkrechten, gestrichelten Linien abgetrennten Bereichs A in Digitaltechnik realisiert. Als Dämpfer 5 können kraftgeregelte Drosselsteller zum Einsatz gelangen, wobei die Querschnittsveränderung der Durchlaßöffnung z. B. durch einen Hubmagnet oder auch durch einen Drehmagnet erfolgen kann. Für eine schnelle Regelung ist vorzugsweise ein großes Variationsverhältnis des Drosselquerschnitts vorgesehen (z. B. 0,7 mm² bis 45 mm²). Möglich ist auch der Einsatz eines sogenannten elektrorheologischen Kraftstellers, dem das Prinzip zugrunde liegt, das bei speziellen Flüssigkeiten die Schubspannung zwischen einer Wand und der Flüssigkeit durch Anlegen eines elektrostatischen Feldes steuerbar ist. Wird der Kolben des Dämpfers bewegt, so strömt die Flüssigkeit durch Ringspalte zwischen steuerspannungsabhängig polarisierten dünnwandigen Rohren. Die Dämpferkraft ist von der Dämpfergeschwindigkeit nahezu unabhängig, sie wird im wesentlichen durch die Stärke des elektrostatischen Feldes bestimmt.

Mit dem erfindungsgemäßen Verfahren lassen sich die Dämpfer derart weich einstellen, daß die Dämpfungskraft näherungsweise bei Null liegt. Praktisch erreichbare Werte liegen bei 300 N/(m/s). Für die maximal harte Einstellung des Dämpfers lassen sich Werte um 17 kN/(m/s) realisieren. Zwischen diesen extremen Werten ändert sich im Fahrbetrieb die Einstellung des Dämpfers ständig. Demgemäß ist eine Beschreibung des Dämpfers durch eine Dämpferkennlinie nicht mehr möglich. Vielmehr ist der Dämpfer als frei steuerbarer Kraftgenerator zu verstehen.

Mit dem erfindungsgemäßen System ist es fernerhin möglich, einen passiven Dämpfer nachzubilden. Der passive Dämpfer kann durch die entsprechende Regler-Software simuliert werden. Hierdurch ist es beispielsweise möglich, für ein neuentwickeltes Fahrzeug auf einfache Weise einen geeigneten passiven Dämpfer aufzufinden. Es ist nicht mehr - wie bisher - erforderlich, in langwierigen Versuchen nacheinander passive Dämpfer ein- und auszubauen, um das Optimum auszuprobieren, sondern durch die Nachbildung eines passiven Dämpfers mit den gewünschten Eigenschaften läßt sich dessen Kennlinie auf einfache Weise ermitteln, die dann auf dem Prüfstand an passiven Dämpfern auf einfache Weise realisiert werden kann. Hierdurch lassen sich die Versuchsreihen bei einem neu entwickelten Fahrwerk bzw. Fahrzeug entscheidend verkürzen.

**Patentansprüche**

1. Verfahren zur Fahrwerkregelung von Fahrzeugen, insbesondere von Personen- und Nutzfahrzeugen, mit wenigstens einem zwischen dem Fahrzeugaufbau und den Rädern angeordneten semiaktiven Dämpfer, bei dem der Dämpfer durch ein abhängig von dem erfaßten dynamischen Fahrzustand erzeugten Ansteuersignal verstellt wird und ersatzweise für gewünschte, aber nicht realisierbare aktive Dämpfereinstellungen Ersatzeinstellungen des Dämpfers getätigt werden, dadurch gekennzeichnet, daß als Ersatzeinstellungen abhängig von dem Betrag der Geschwindigkeit (v) des Dämpferkolbens, die in dem Moment vorliegt, in dem eine Ersatzeinstellung erforderlich wird, eine maximal harte oder weiche Dämpfereinstellung gewählt wird, und diese Ersatzeinstellung solange beibehalten wird, bis wieder ein Betriebspunkt vorliegt, der von dem semiaktiven Dämpfer (5) realisierbar ist.

2. Verfahren nach einem der vorhergehenden Ansprüche, **dadurch gekennzeichnet**, daß das Produkt aus dem Steuersignal (Steuerspannung $U_1$) und dem Istwert der Dämpferkraft ($F_d$) gebildet wird und daß bei einem negativen Vorzeichen des Produkts die Ersatzeinstellung erfolgt.

3. Verfahren nach einem der vorhergehenden Ansprüche, **dadurch gekennzeichnet**, daß der Dämpfer (5) ersatzweise maximal hart eingestellt wird, wenn der Betrag der Kolbengeschwindigkeit (v) unterhalb einer Grenzgeschwindigkeit ($V_{Grenz}$) liegt und daß eine maximale weiche Ersatzeinstellung erfolgt, wenn der Betrag der Kolbengeschwindigkeit (v) oberhalb der Grenzgeschwindigkeit ($V_{Grenz}$) liegt.

4. Verfahren nach einem der vorhergehenden Ansprüche, **dadurch gekennzeichnet,** daß das Steuersignal eine Steuerspannung ($U_l$) ist.

5. Verfahren nach einem der vorhergehenden Ansprüche, **dadurch gekennzeichnet,** daß die Steuerspannung ($U_l$) eine von einem Regler (26) gelieferte lineare Spannung ist.

6. Verfahren nach einem der vorhergehenden Ansprüche, **dadurch gekennzeichnet,** daß die vom Regler (26) gelieferte lineare Steuerspannung ($U_l$) in eine dem nicht linearen Steuerverhalten des Dämpfers (5) angepaßte Betätigungsspannung ($V_d$) umgeformt wird.

7. Verfahren nach einem der vorhergehenden Ansprüche, dadurch gekennzeichnet, daß als Fahrzustandsgrößen die Eingangsgrößen: relativer Einfederweg ($x_{ar}$ = Weg zwischen Aufbau des Fahrzeugs und einem dazugehörigen Rad), Radbeschleunigung ($\ddot{x}_r$ = Vertikalbeschleunigung des Rades in Bezug auf ein Inertialsystem), Dämpferkraft ($F_d$), Aufbaubeschleunigung ($\ddot{x}_a$ = Vertikalbeschleunigung des Aufbaus des Fahrzeugs in Bezug auf das Inertialsystem), Straßenunebenheiten (S) und Straßenunebenheitsgeschwindigkeit ($\dot{S}$) verwendet werden.

8. Verfahren nach einem der vorhergehenden Ansprüche, **dadurch gekennzeichnet**, daß die Dämpferkräfte ($F_d$ = Sollkräfte) so bestimmt werden, daß beim Einlenken des Fahrzeugs in eine Kurve ein leicht übersteuerndes und beim Zurücklenken in die Geradeausfahrt ein leicht untersteuerndes Lenkverhalten erzeugt wird.

9. Verfahren nach einem der vorhergehenden Ansprüche, **dadurch gekennzeichnet,** daß nach dem elektrorheologischen Prinzip arbeitende semiaktive Dämpfer (5) zum Einsatz kommen.

10. Vorrichtung zur Fahrwerkregelung von Fahrzeugen, insbesondere von Personen- und Nutzfahrzeugen, mit wenigstens einem zwischen dem Fahrzeugaufbau und den Rädern angeordneten semiaktiven Dämpfer, wobei eine Signalverarbeitungsschaltung vorgesehen ist, mittels der der Dämpfer durch ein abhängig von dem erfaßten dynamischen Fahrzustand erzeugten Ansteuersignal verstellt wird und ersatzweise für gewünschte, aber nicht realisierbare aktive Dämpfereinstellungen Ersatzeinstellungen des Dämpfers getätigt werden, dadurch gekennzeichnet, daß mittels der Signalverarbeitungsschaltung als Ersatzeinstellungen abhängig von dem Betrag der Geschwindigkeit (v) des Dämpferkolbens, die in dem Moment vorliegt, in dem eine Ersatzeinstellung erforderlich wird, eine maximal harte oder weiche Dämpfereinstellung gewählt wird, und diese Ersatzeinstellung solange beibehalten wird, bis wieder ein Betriebspunkt vorliegt, der von dem semiaktiven Dämpfer (5) realisierbar ist.

11. Vorrichtung nach Anspruch 10, **dadurch gekennzeichnet**, daß die Signalverarbeitungsschaltung mindestens einen Komparator aufweist zum Vergleich des Betrags der Kolbengeschwindigkeit (v) mit der Grenzgeschwindigkeit ($V_{Grenz}$).

**Claims**

1. Method for the suspension control of vehicles, in particular motorcars and commercial vehicles, which have at least one semi-active damper arranged between the vehicle superstructure and the wheels, in which method the damper is adjusted by a control signal generated in a manner dependent on the sensed dynamic rolling condition of the vehicle and substitute settings for the damper are made as an alternative for desired active damper settings which, however, cannot be implemented, characterised in that as substitute settings a damper setting of maximum hardness or softness, dependent on the amount of speed (v) of the damper piston which exists at the moment in which a substitute setting becomes necessary is selected, and this substitute setting is retained until an operating point which the semi-active damper (5) can implement is again obtained.

2. Method in accordance with one of the preceding claims, characterised in that the product is formed from the control signal (control voltage $U_1$) and the actual value of the damper force ($F_d$) and that the substitute setting is made when the product has a negative sign.

3. Method in accordance with one of the preceding claims, characterised in that the damper (5) is set, as an alternative, with maximum hardness if the amount of the piston speed (v) is below a limit speed ($V_{limit}$) and that a substitute setting with maximum softness is made if the amount of the piston speed (v) is above the limit speed ($V_{limit}$).

4. Method in accordance with one of the preceding claims, characterised in that the control signal is a control voltage ($U_1$).

5. Method in accordance with one of the preceding claims, characterised in that the control voltage ($U_1$) is a linear voltage supplied by a controller (26).

6. Method in accordance with one of the preceding claims, characterised in that the linear control voltage ($U_1$) supplied by the controller (26) is transformed into an actuating voltage ($V_d$) matched to the non-linear control behaviour of the damper (5).

7. Method in accordance with one of the preceding claims, characterised in that the following input variables are used as travel condition parameters: relative spring deflection path ($x_{ar}$ = path between vehicle superstructure and an associated wheel), wheel acceleration ($\ddot{x}_r$ = vertical acceleration of the wheel in relation to an inertial system), damper force ($F_d$), body acceleration ($\ddot{x}_a$ = vertical acceleration of the vehicle superstructure in relation to the inertial system), road unevennesses (S), and road unevenness speed ($\dot{S}$).

8. Method in accordance with one of the preceding claims, characterised in that the damper forces ($F_d$ = set-point forces) are determined so that during steering of the vehicle into a bend, slight oversteering is produced, and during return to straight-ahead driving, a slight understeering is produced.

9. Method in accordance with one of the preceding claims, characterised in that semi-active dampers (5) are used which work by the electrorheological principle.

10. Method for the suspension control of vehicles, in particular motorcars and commercial vehicles, which have at least one semi-active damper arranged between the vehicle superstructure and the wheels, a signal processing circuit being provided by means of which the damper is adjusted by a control signal generated in a manner dependent on the sensed dynamic rolling condition of the vehicle and substitute settings for the damper are made as an alternative for desired active damper settings which, however, cannot be implemented, characterised in that as substitute settings a damper setting of maximum hardness or softness, dependent on the amount of speed (v) of the damper piston which exists at the moment in which a substitute setting becomes necessary is selected by means of the signal processing circuit, and this substitute setting is retained until an operating point which the semi-active damper (5) can implement is again obtained.

11. Device in accordance with claim 10, characterised in that the signal processing circuit has at least one comparator to compare the amount of the piston speed (v) with the limit speed ($V_{limit}$).

**Revendications**

1. Procédé pour le réglage du châssis de véhicules, en particulier de voitures particulières et de véhicules utilitaires, avec au moins un amortisseur semi-actif disposé entre la carrosserie du véhicule et les roues, dans lequel l'amortisseur est réglé par un signal de commande produit en fonction de l'état de marche dynamique détecté et dans lequel en remplacement pour des réglages souhaités mais non réalisables d'amortisseurs actifs, on réalise des réglages de remplacement de l'amortisseur, procédé caractérisé en ce que, comme réglages de remplacement on choisit, en fonction de la valeur de la vitesse (v) du piston de l'amortisseur, qui existe au moment, dans lequel il est nécessaire d'avoir un réglage de remplacement, un réglage de l'amortisseur de dureté maximale ou de mollesse maximale, et l'on conserve ce réglage de remplacement jusqu'à ce qu'il y ait de nouveau un point de fonctionnement qui soit réalisable par l'amortisseur semi-actif (5).

2. Procédé selon la revendication 1, caractérisé en ce qu'on forme le produit du signal de commande (tension de commande $U_1$) et de la valeur réelle de la force de l'amortisseur ($F_d$) et en ce que le réglage de remplacement a lieu quand le signe du produit est négatif.

3. Procédé selon l'une des revendications précédentes, caractérisé en ce que l'amortisseur (5) est réglé en remplacement à la dureté maximale, quand la valeur de la vitesse du piston (v) se trouve en-dessous d'une vitesse limite ($V_{lim}$) et en ce qu'un réglage de remplacement à la mollesse maximale a lieu, quand la valeur de la vitesse du piston (v) se trouve au-dessus de la vitesse limite ($V_{lim}$).

4. Procédé selon l'une des revendications précédentes, caractérisé en ce que le signal de commande est une tension de commande ($U_1$).

5. Procédé selon l'une des revendications précédentes, caractérisé en ce que la tension de commande ($U_1$) est une tension linéaire délivrée par un régulateur (26).

6. Procédé selon l'une des revendications précédentes, caractérisé en ce que la tension linéaire de commande ($U_1$) délivrée par le régulateur (26) est transformée en une tension d'actionnement ($V_d$) adaptée au comportement de commande non linéaire de l'amortisseur (5).

7. Procédé selon l'une des revendications précédentes, caractérisé en ce que, comme grandeurs d'état de marche on utilise les grandeurs d'entrée suivantes : course relative de compression des ressorts ($x_{ar}$ = course entre la carrosserie du véhicule et une roue correspondante), accélération de la roue ($\ddot{x}_r$ = accélération verticale de la roue par rapport à un système inertiel), force d'amortissement ($F_d$), accélération de la carrosserie ($\ddot{x}_a$ = accélération verticale de la carrosserie du véhicule par rapport au système inertiel), inégalités de la chaussée (S) et vitesse d'inégalités de la chaussée ($\dot{S}$).

8. Procédé selon l'une des revendications précédentes, caractérisé en ce que les forces d'amortissement ($F_d$ = forces de consigne) sont déterminées de telle façon, que lors du braquage du véhicule dans un virage on obtienne un comportement de braquage légèrement survireur et lors du braquage en retour pour revenir à une marche de ligne droite on obtienne un comportement de braquage légèrement sous-vireur.

9. Procédé selon l'une des revendications précédentes, caractérisé en ce que l'on en vient à utiliser des amortisseurs semi-actifs (5) fonctionnant selon le principe électrorhéologique.

10. Procédé pour le réglage du châssis de véhicules, en particulier de voitures particules et de véhicules utilitaires, avec au moins un amortisseur semi-actif disposé entre la carrosserie du véhicule et les roues, dans lequel il est prévu un circuit de retraitement de signaux, au moyen duquel l'amortisseur est réglé par un signal de commande produit par l'état de marche dynamique détecté et en remplacement pour les réglages d'amortisseur actifs souhaités mais non réalisables des réglages de remplacement de l'amortisseur sont réalisés, dispositif caractérisé en ce qu'au moyen du circuit de retraitement des signaux, on choisit comme réglages de remplacement en fonction de la valeur de la vitesse (v) du piston de l'amortisseur qui existe au moment où il est nécessaire d'avoir un réglage de remplacement, un réglage de dureté maximale ou de mollesse maximale et on conserve ce réglage de remplacement jusqu'à ce qu'il y ait de nouveau un point de fonctionnement, qui soit réalisable par l'amortisseur semi-actif (5).

11. Dispositif selon la revendication 10, caractérisé en ce que le circuit de retraitement de signaux comprend au moins un comparateur pour comparer la valeur de la vitesse du piston (v) à la vitesse limite ($V_{lim}$).

Fig. 1

Fig. 2

Fig. 3

Fig. 4

Fig. 5

EP 0 434 780 B1

$V_d$

34

27

5

26

33

$F_d$

32

31

$U$

$K_1$   $\dot{X}_{ar}$   $X_{ar}$

$K_2$   $F_d$   $F_d$

$K_3$   $S$

$K_4$   $\dot{S}$   $\ddot{X}_r$

$K_5$   $\dot{X}_a$   $\ddot{X}_a$

Fig. 6

EP 0 434 780 B1

16